# EUROPÄISCHE PATENTSCHRIFT

(11) **EP 3 315 907 B1**
(45) Veröffentlichungstag und Bekanntmachung des Hinweises auf die Patenterteilung: **26.03.2025**
(21) Anmeldenummer: 16196052.1
(22) Anmeldetag: 27.10.2016
(51) Int. Cl.: G01C 15/00, G06T 15/00

(54) **VERFAHREN ZUR VISUELLEN DARSTELLUNG VON SCANDATEN**
VERFAHREN ZUR VISUELLEN DARSTELLUNG VON SCANDATEN
VERFAHREN ZUR VISUELLEN DARSTELLUNG VON SCANDATEN

(43) Veröffentlichungstag der Anmeldung: 02.05.2018
(73) Patentinhaber: Leica Geosystems AG, 9435 Heerbrugg (CH)
(72) Erfinder: HERBST, Christoph, A-6850 Dornbirn (AT)
(74) Vertreter: Kaminski Harmann

(56) Entgegenhaltungen:
- EP-A1- 2 947 630
- DE-A1- 102010 020 925

## Beschreibung

Die Erfindung betrifft ein Verfahren zur visuellen Darstellung von Scandaten nach dem Oberbegriff von Anspruch 1, sowie ein Vermessungssystem mit Scanfunktionalität nach dem Oberbegriff des Anspruchs 14.

3D-Scannen ist eine sehr wirkungsvolle Technologie um innerhalb von Minuten oder Sekunden Millionen von Einzelmessdaten, insbesondere 3D-Koordinaten, zu produzieren. Typische Messaufgaben sind die Aufnahme von Objekten bzw. deren Oberflächen wie Industrieanlagen, Häuserfassaden oder historischen Gebäuden aber auch von Unfallorten und Verbrechensszenen. Vermessungsgeräte mit Scanfunktionalität sind beispielsweise Totalstationen und Laserscanner wie der Leica P20 oder Leica Multi Station 50, welche verwendet werden, um 3D-Koordinaten von Oberflächen zu messen bzw. zu erstellen. Zu diesem Zweck müssen sie in der Lage sein, den Messstrahl -meist ein Laserstrahl- einer Entfernungsmessvorrichtung über eine Oberfläche zu führen und damit bei einer vorgegebenen Abtast- oder Messrate sukzessive zu verschiedenen Messrichtungen gleichzeitig Richtung und Entfernung zum jeweiligen Messpunkt zu erfassen. Richtung und Entfernung sind dabei bezogen auf einen Messbezugspunkt wie z.B. der Standort oder Nullpunkt des Vermessungsgeräts, liegen mit anderen Worten in einem gemeinsamen Bezugs- oder Koordinatensystem, so dass also die einzelnen Messrichtungen und damit die Einzelmessdaten über den gemeinsamem Messbezugspunkt miteinander verknüpft sind. Aus dem Entfernungsmesswert und der damit korrelierten Messrichtung für jeden Punkt kann somit anschliessend, insbesondere mittels einer externen Datenverarbeitungsanlage, aus der Vielzahl der gescannten Punkte eine sogenannte 3D-Punktwolke generiert werden.

Vom prinzipiellen Aufbau her sind derartige stationäre Scanner also ausgebildet, um mit einem, meist elektrooptischen und laserbasierten, Entfernungsmesser eine Distanz zu einem Objektpunkt als Messpunkt zu erfassen. Der Entfernungsmesser kann beispielsweise nach den Prinzipien der Time-Of-Flight- (TOF), Phasen-, Wave-Form-Digitizer-(WFD) oder interferometrischen Messung ausgeführt sein. Für schnelle und genaue Scanner ist insbesondere eine kurze Messzeit bei gleichzeitig hoher Messgenauigkeit gefordert, beispielsweise eine Distanzgenauigkeit im mm-Bereich oder darunter bei Messzeiten der Einzelpunkte im Bereich von Sub-Mikrosekunden bis Millisekunden. Die Messreichweite reicht dabei von wenigen Zentimetern bis hin zu einigen Kilometern.

Eine ebenfalls vorhandene Messrichtungs-Ablenkeinheit ist dabei derart ausgebildet, dass der Messstrahl des Entfernungsmessers in zumindest zwei unabhängige Raumrichtungen abgelenkt wird, die Messrichtung also fortlaufend verändert wird, wodurch ein (teil-)kugelförmiger räumlicher Mess- oder Scanbereich aufgenommen werden kann. Der Scanbereich beträgt dabei in der Horizontalen oft 360°, also ein Vollkreis, und in der Vertikalen z.B. 180°, so dass mindestens eine Halbkugel abgedeckt ist. Die Scanauflösung, mit der der Scanbereich abgedeckt ist, ergibt sich dabei durch die Anzahl der Messungen oder mit anderen Worten Anzahl der gemessenen Punkte pro Raumbereich oder Kugelflächenelement. Die Ablenkeinheit kann in Form eines bewegten Spiegels oder alternativ auch durch andere, zur gesteuerten Winkelablenkung von optischer Strahlung geeignete Elemente, wie beispielsweise verdrehbare Prismen, bewegliche Lichtleiter, verformbare optische Komponenten etc. realisiert werden. Die Messung erfolgt meist unter Bestimmung von Entfernung und Winkeln, also in Kugelkoordinaten, welche zur Darstellung und Weiterverarbeitung auch in kartesische Koordinaten transformiert werden können.

Dem Stand der Technik entspricht die Darstellung der 3D-Scandaten als Projektion auf die Ebene eines flächigen Displays, wie z.B. offenbart in der DE 10 2010 020 925 A1. Durch diese Darstellungsart ist zwar auch eine Visualisierung der Scandaten unmittelbar nach dem Scan auf einem Display des Vermessungsgeräts möglich, welche z.B. eine gewisse Überprüfung der Scanqualität erlaubt. Aufgrund der Scandatenaufnahme in einem sphärischen Koordinatensystem sind damit jedoch starke Geometrieverzerrungen verbunden, z.B. werden Geraden auf dem Display als gebogenen Linien dargestellt.

Die WO 2016/055757 schlägt eine Verfahren zur visuellen Darstellung von Scandaten vor, mittels dem Geometrieverzerrungen vermeidbar sind. Die Scandaten werden dabei nach Scannen mit dem Vermessungsgerät auf einem externen Scandatenserver auf Würfelflächen projiziert, wobei das Zentrum des Würfels mit dem Projektionszentrum zusammenfällt. Hierbei werden die Scandaten in Panorama-Kugel-Texturen konvertiert und anschliessend in korrespondierende cube maps konvertiert. Das dort offenbarte Verfahren geht also nachteilig mit einem grossen Rechenaufwand einher, wodurch eine visuelle Darstellung mittels einer Recheneinheit des Vermessungsgeräts bzw. noch vor Ort nicht möglich ist. Die WO 2016/055757 beschreibt das Verfahren daher als ersten Schritt für ein nachfolgendes Rendering.

Für eine geometrisch völlig korrekte visuelle Darstellung müssen zudem die Scandaten vor der Projektion noch korrigiert werden, indem die Geometriefehler des Vermessungsgeräts im post-processing berücksichtigt werden. Dies erfordert weitere Rechenkapazität, wodurch besonders in Anbetracht der grossen Mächtigkeit der Scandaten eine solche geometriekorrigierte Darstellung derzeit mit Verfahren des Stands der Technik nicht zeitnah nach dem Messvorgang möglich ist.

Aus der EP 2 947 630 A1 ist ein Verfahren zur Datenkompression einer Punktwolke bekannt.

Aufgabe der vorliegenden Erfindung ist deshalb, ein verbessertes Verfahren zur visuellen Darstellung von Scandaten bereitzustellen.

Eine weitere Aufgabe ist die Bereitstellung eines vereinfachten Verfahrens zur visuellen Darstellung von Scandaten als Würfeldarstellung.

Eine weitere Aufgabe ist die Bereitstellung eines vereinfachten Verfahrens zur fehlerkorrigierten visuellen Würfeldarstellung von Scandaten.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft ein Verfahren zur visuellen Darstellung von Scandaten, welche aufgenommen sind mit einem, insbesondere stationären, Vermessungsgerät mit Scanfunktionalität zum Aufnehmen von Objektoberflächen mittels Messstrahlung, insbesondere Laserstrahlung. Vorzugsweise handelt es sich bei dem Vermessungsgerät um einen Laserscanner oder eine Totalstation. Die Scandaten setzen sich zusammen aus einer Vielzahl von Einzelmessdaten, die jeweils wenigstens einen mit einer jeweiligen Messrichtung verknüpften Messwert aufweisen. Bei dem wenigstens einen Messwert handelt es sich jedenfalls um einen mittels der Messstrahlung gemessenen Entfernungsmesswert zu einem in Messrichtung liegenden Oberflächenpunkt. Alle Messrichtungen gehen von einem gemeinsamen Messbezugspunkt aus und die Messrichtungen sind derart verschieden voneinander, dass ein vorbestimmter Scanbereich mit einer vorbestimmten Scanauflösung abgedeckt ist. Vorzugsweise umfasst der Scanbereich in der Horizontalen 360° und in der Vertikalen etwa 270°.

Weiters erfolgt die Darstellung der Scandaten mittels einer image map mit einer von einer vorbestimmten Anzeigeauflösung abhängigen Anzahl von map-Punkten. Dabei erfolgt die Darstellung der Scandaten erfindungsgemäss mittels einer Zuordnungsvorschrift zur Zuordnung von Messwert, insbesondere Entfernungswert, zu map-Punkt, wobei die Zuordnung unmittelbar anhand der jeweiligen mit dem Messwert verknüpften Messrichtung erfolgt. Vorzugsweise erfolgt dabei die Erzeugung der image map mittels einer Zuordnungsvorschrift zur Zuordnung von Messwert zu map-Punkt, wobei die Zuordnung unmittelbar anhand der jeweiligen mit dem Messwert verknüpften Messrichtung erfolgt.

Optional ist dabei die image map als eine cube map ausgebildet und die Darstellung erfolgt als Würfeldarstellung. Die Würfeldarstellung ist dabei vorzugsweise verzerrungsfrei, so dass eine geometrisch korrekte Darstellung der Scandaten erfolgt.

Als weiter Option erfolgt die Darstellung der Scandaten mittels einer Anzeigeeinheit mit einer Anzahl flächig angeordneter Anzeigepunkte. Dabei wird abhängig von einem jeweiligen anzuzeigenden Blickfeld (FoV) als **Ausschnitt** aus der image map einem jeden Anzeigepunkt mittels der Zuordnungsvorschrift ein einen Messwert darstellender Helligkeits- und/oder Farbwert zugeordnet, wobei der Messwert einem der im Blickfeld liegenden aufgenommenen Oberflächenpunkte zugehörig ist.

In einer Fortbildung des erfindungsgemässen Verfahrens sind in der Zuordnungsvorschrift systematische Gerätefehler, insbesondere Achsenfehler, des Vermessungsgeräts berücksichtigt, so dass die Darstellung der Scandaten aufgrund der fehlerkorrigierenden Zuordnungsvorschrift gerätefehlerkorrigiert erfolgt.

Optional sind die systematischen Gerätefehler für das Vermessungsgerät individuell mittels eines Kalibriervorgangs in Form von Kalibrierparametern bestimmt und die Gerätefehler in der Zuordnungsvorschrift anhand der Kalibrierparameter berücksichtigt. Alternativ oder zusätzlich betreffen die systematischen Gerätefehler Winkelmessungen zur Bestimmung der Messrichtungen, so dass also in dieser Fortbildung eine Fehlerkorrektur der Messrichtungen erfolgt.

Erfindungsgemäss erfolgt die Zuordnung angepasst an die gewählte Anzeigeauflösung, **d.h.** die Zuordnung ist abgestimmt auf eine spezifische Auflösung, mit der die Darstellung erfolgen soll. Vorzugsweise erfolgt die Anpassung, indem die Scanauflösung über den gesamten Scanbereich durch Auswahl von Messrichtungen und damit von Einzelmessdaten aus der Vielzahl im Rahmen der Zuordnung auf die Anzeigeauflösung gleichmässig verringert wird.

Optional erfolgt dabei die Auswahl indem einem jeden map-Punkt der Messwert der nächstliegenden Messrichtung zugeordnet wird. Vorzugsweise jedoch wird einem jedem map-Punkt der Messwert derjenigen der naheliegenden Messrichtungen zugeordnet, welcher eine vergleichsweise hohe Messwertqualität und/oder Informationsgehalt aufweist. In dieser Fortbildung werden also bei der Auswahl Kriterien der Qualität oder des Informationsgehalts berücksichtigt. So werden also Einzelmessdaten mit einer vergleichsweise hohen Qualität, z.B. Einzelmessdaten mit einem vergleichsweise guten Signal-Rausch-Verhältnis, und/oder hohen Informationsgehalt, also z.B. Einzelmessdaten, welche einen hohen Zugewinn an Information über die gescannte Objektoberfläche bedeuten, bevorzugt ausgewählt. Hierdurch wird vorteilhaft vermieden, dass besonders hochwertige und/oder informative Scandaten nicht ausgewählt werden und damit für die Darstellung nicht genutzt werden.

Als weitere Option wird im Rahmen einer solchen angepassten Zuordnung basierend auf der Zuordnungsvorschrift und angepasst an die gewählte Anzeigeauflösung ein verringerter Scandatensatz erstellt und dieser drahtlos an ein externes Datenverarbeitungsgerät übertragen. Das Übertragen erfolgt vorzugsweise, indem der verringerte Scandatensatz zuerst vom Vermessungsgerät an ein Datenübertragungsgerät, insbesondere einem Field-Controller, Tablet oder Smartphone, vor Ort übermittelt wird und vom Datenübertragungsgerät per Funknetz, insbesondere per LTE, an das externe Datenverarbeitungsgerät übertragen wird. Alternativ oder zusätzlich erfolgt mittels des externen Datenverarbeitungsgeräts ein Bearbeiten des Scandatensatzes und Erstellen eines bearbeiteten Scandatensatzes. Teile des bearbeiteten Scandatensatz oder der ganze bearbeitete Scandatensatz werden dann zurück, z.B. an das Vermessungsgerät oder ein Tablet vor Ort übertragen, wo sie optional bei der Darstellung der Scandaten durch eine Anzeigeeinheit, beispielsweise des Vermessungsgeräts oder Tablets, berücksichtigt werden.

Der Messbezugspunkt ist bevorzugt ein Zentrum des Vermessungsgeräts und/oder entspricht im Falle einer als cube map ausgebildeten image map dem Mittelpunkt des Würfels. Die Messrichtungen liegen bevorzugt in Form von Polar- und Azimutwinkel, d.h. zum messenden Bestimmen einer Messrichtung im Rahmen des vorliegenden Verfahrens erfolgt jeweils ein Messen eines Polarwinkel und eines Azimutwinkels. Vorzugsweise erfolgt die Zuordnung auch ausschliesslich anhand der jeweiligen mit dem Messwert verknüpften Messrichtung, so dass weitere (Mess-)grössen keinen Einfluss auf die Zuordnung und damit Darstellung haben (abgesehen von Verfahrensvarianten mit einer Berücksichtigung von systematischen Gerätefehlern, wobei selbst dann keine unmittelbar im Zusammenhang mit dem Scanvorgang gemessenen Werte oder Grössen in die Zuordnung einfliessen, sondern vorab bestimmte Werte).

Optional ist die Zuordnungsvorschrift als Look-Up-Tabelle ausgebildet, in der für jeden map-Punkt direkt der zugeordneten Messwerte abrufbar ist oder im Falle mehrerer zugeordneter Messwerte diese abrufbar sind.

Erfindungsgemäss ist durch die Messrichtungen ein regelmässiges Raster gebildet und die Einzelmessungen sind in einer das regelmässige Raster abbildenden Matrix mit Spalten- und Zeilenindex abgelegt, wobei jedem map-Punkt ein Feld der Matrix zugeordnet ist.

In einer weiteren Fortbildung des erfindungsgemässen Verfahrens erfolgt eine automatische Anpassung der Darstellung abhängig vom ausgewählten Blickfeld, vorzugsweise eine Anpassung der Helligkeit, mit der die map-Punkte anzuzeigen sind, und/oder abhängig von der Ausrichtung einer darstellenden Anzeigeeinheit (GUI) relativ zum Scanbereich, vorzugsweise eine Anpassung des dargestellten Blickfelds. Eine solche automatische Anpassung erfolgt vor allem dann, wenn die Darstellung wie oben beschrieben auf einem externen Gerät wie einem Smartphone, Tablet, einer augmented-reality-Brille oder einem Head-Up-Display erfolgt.

Als weitere Option werden Metadaten, wie beispielsweise Texte, Bilder, Voice-Memos, CAD-Daten, Punktkoordinaten oder ein anhand der Scandaten bestimmter Abstand zwischen zwei Objektpunkten oder Winkel zwischen zwei Linien mittels eines Anzeigepunkts, vorzugsweise dauerhaft, mit einem map-Punkt oder einem dem map-Punkt zugeordneten Messwert verknüpft, so dass vorzugsweise diese Metadaten kombiniert mit dem Messwert darstellbar sind, z.B. indem die Metadaten als zusätzliche map-Layer abgelegt werden, wobei das Metadaten-Layer zusammen mit der Messwerte-Layer angezeigt werden.

In einer weiteren Fortbildung des erfindungsgemässen Verfahrens erfolgt die Darstellung vor Ort, und zwar auf einer Anzeigeeinheit (GUI) des Vermessungsgeräts. Alternativ oder zusätzlich zur Darstellung auf einer Anzeigeeinheit des Vermessungsgeräts erfolgt die Darstellung auf einem externen mit dem Vermessungsgerät, vorzugsweise drahtlos oder auch drahtgebunden, verbundenen Gerät, z.B. ein Datenverarbeitungsgerät mit Anzeigeeinheit (GUI), vorzugsweise ein Tablet oder Smartphone. Die Darstellung auf einem externen Gerät bietet die Vorteile, dass ein solches meist ein besseres oder grösseres Display als ein Vermessungsgerät aufweist, so dass für einen Benutzer eine übersichtlichere und informativere Visualisierung der Scandaten möglich ist. Zudem weisen solche Geräte, z.B. ein mobiler Computer, oft eine angenehmere oder einfachere Bedienbarkeit und/oder eine bessere Rechenleistung als ein Vermessungsgerät auf, so dass z.B. eine etwaige Datenverarbeitung oder -bearbeitung mittels des externen Geräts besser oder überhaupt erst erfolgen kann. Handelt es sich optional bei einem solchen drahtlos oder drahtgebunden verbundenen Gerät beispielsweise um eine als augmented-reality-Brille ausgebildeten Anzeigeeinheit und/oder eine als Head-up-Display ausgebildeten Anzeigeeinheit, bietet dies z.B. die bekannten Vorteile von augmented reality und im Gegensatz zu einem handgehaltenen Gerät freie Benutzerhände..

Optional erfolgt die Darstellung vor Ort unmittelbar nach der Scandatenaufnahme oder bereits während der Scandatenaufnahme für bereits aufgenommene Scandaten. Alternativ oder zusätzlich dient die Darstellung vor Ort zur Kontrolle, vorzugsweise auf Vollständigkeit, der Scandaten.

Als weitere Option werden neben dem Entfernungsmesswert wenigstens einer der folgenden Messwerte mittels der Zuordnungsvorschrift einem Würfelpunkt zugeordnet und sind damit einzeln oder kombiniert mit anderen Messwerten darstellbar: Intensität der Messstrahlung, Rauschmass, Messgenauigkeit, Scandatendichte (also wie viele Einzelmessdaten pro Raum- oder Flächenbereich vorliegen), Farbinformation zum Scanbereich, welche mit einer Kamera aufgenommen ist. Vorzugsweise werden die unterschiedlichen Messwerte als unterschiedliche image map-layer bereitgehalten.

In einer weiteren Fortbildung erfolgt ein Verknüpfen von zwei oder mehr an unterschiedlichen Standorten mittels des Vermessungsgeräts aufgenommenen Scandatensätzen, wobei es sich bei dem Verknüpfen bevorzugt um eine Grobausrichten der Scandatensätze bzw. der aufgenommenen Objektoberflächen, welche die Scandatensätze repräsentieren, zueinander handelt. Optional erfolgt das Verknüpfen manuell anhand der Darstellung, vorzugsweise durch Markieren von Anzeigepunkten bzw. gemeinsamer features und/oder Anzeigebereichen auf einer darstellenden Anzeigeeinheit, z.B. mittels einer berührungssensitiven Anzeigeeinheit. Alternativ oder zusätzlich erfolgt das Verknüpfen automatisch durch Heranziehung zusätzlicher Positionsdaten, welche von einem Positionsmesser, beispielsweise einer IMU, GPS-Empfänger und/oder Videotracker, des Vermessungsgeräts bereitgestellt sind. Als weitere Option erfolgt anschliessend an das Verknüpfen eine, vorzugsweise der visuellen Kontrolle dienende, Anzeige der verknüpften Scandatensätze auf einer Anzeigeeinheit.

Das erfindungsgemässe Verfahren bietet den Vorteil, dass aufgrund der Darstellung mittels einer image map eine geometrietreue Darstellung ermöglicht ist und dabei die Erzeugung der image map durch die Zuordnung unmittelbar anhand der jeweiligen mit dem Messwert verknüpften Messrichtung eine Darstellung von Scandaten gegenüber Verfahren des Stands der Technik wesentlich vereinfacht ist. Die simple Zuordnung oder Rechenvorschrift erfordert nur wenig Rechenaufwand (dies selbst in erfindungsgemässen Ausbildungsformen mit Gerätefehlerkorrektur, da die Korrektur statisch ist), so dass die Berechnungen, die für eine Darstellung erforderlich sind, sehr rasch und **z.B.** auch mit der -im Vergleich zu Office-Rechnern- geringen Rechenkapazität einer Laserscanners, Totalstation oder Tablets oder Smartphones problemlos möglich sind, so dass eine Visualisierung der Scandaten vor Ort und unmittelbar nach dem Scanvorgang ermöglicht ist und -besonders durch Verwendung einer cube map- die Darstellung zudem geometrisch korrekt erfolgt. Dies erlaubt z.B. eine unmittelbare Kontrolle des Scandaten, so dass z.B. Scanfehler oder Scanlücken sofort für den Benutzer erkennbar und ggf. korrigierbar sind. Hingegen ist eine solche Darstellung mit Verfahren des Stands der Technik nicht vor Ort möglich, sondern erst im Post-Processing im Office, so dass eine Behebung von Scanfehler oder -lücken sehr viel aufwändiger oder manchmal gar nicht mehr möglich ist.

Im Falle eines erfindungsgemässen Verfahrens mit an eine Anzeigeauflösung angepasster Zuordnung liegt zudem der Vorteil vor, dass der Rechenaufwand weiter verkleinert wird, da nicht mehr alle Messrichtungen bzw. Einzelmessdaten berücksichtigt werden müssen. Zudem kann damit ein verringerter Scandatensatz erstellt werden, d.h. ein geringeres Datenaufkommen, was eine rasche drahtlose Übertragung von darstellbaren Scandaten ohne Verlust der Messwertinformation (aufgrund der Zuordnung) an externe Anzeige- und/oder Datenverarbeitungsgeräte ermöglicht, wie beispielsweise ein Tablet oder Smartphone oder auch an ein Office-Gerät. Vorteilhaft ist dabei, dass die Scandaten auch auf solch einem externen Gerät - z.B. auch unmittelbar anschliessend an den Scan oder sogar noch in dessen Verlauf - bearbeitet werden und an das Vermessungsgerät zurückgesandt werden können. Somit ist z.B. eine simultane und ortverschiedene Bearbeitung von Scandaten durch mehrerer Benutzer möglich.

Die vorliegende Erfindung beinhaltet des Weiteren ein Computerprogrammprodukt, das auf einem maschinenlesbaren Träger gespeichert ist, oder Computer-Datensignal, verkörpert durch eine elektromagnetische Welle, mit Programmcode, zur Steuerung bzw. Durchführung des erfindungsgemässen Verfahrens.

Die vorliegende Erfindung betrifft ausserdem ein Vermessungssystem mit Scanfunktionalität, insbesondere mit einem als Laserscanner oder Totalstation ausgebildeten Vermessungsgerät. Das Vermessungssystem weist eine Steuer- und Auswerteeinheit auf, welche im Vermessungsgerät oder einem damit vor Ort verbundenen, jedoch baulich getrennten Datenverarbeitungsgerät, wie z.B. einem Tablet oder Smartphone angeordnet ist. Dabei ist erfindungsgemäss die Steuer- und Auswerteeinheit zur Ausführung des erfindungsgemässen Verfahrens ausgebildet.

Das erfindungsgemässe Verfahren und die erfindungsgemässe Vorrichtung werden nachfolgend anhand von den in den Zeichnungen schematisch dargestellten Ausführungen und Anwendungsvorgängen näher beschrieben.

Im Einzelnen zeigen
- Fig. 1: ein stationäres Vermessungsgerät mit Scanfunktionalität,
- Fig. 2: zeigt einen Ausschnitt aus dem Vermessungsgerät und der aufgenommenen Objektoberfläche,
- Fig. 3: schematisch ein Prinzip des erfindungsgemässen Verfahrens,
- Fig. 4: schematisch eine erfindungsgemässe Zuordnung mittels Tabellen,
- Fig. 5: schematisch eine Fortbildung des erfindungsgemässen Verfahrens, bei dem die Zuordnung angepasst an die vorbestimmte Anzeigeauflösung erfolgt,
- Fig. 6: illustriert schematisch eine an eine vorbestimmte Anzeigeauflösung angepasste Zuordnung mit gleichmässiger Verringerung der Scanauflösung auf die Anzeigeauflösung, und
- Fig. 7a,b: schematisch eine weitere Fortbildung des erfindungsgemässen Verfahrens.

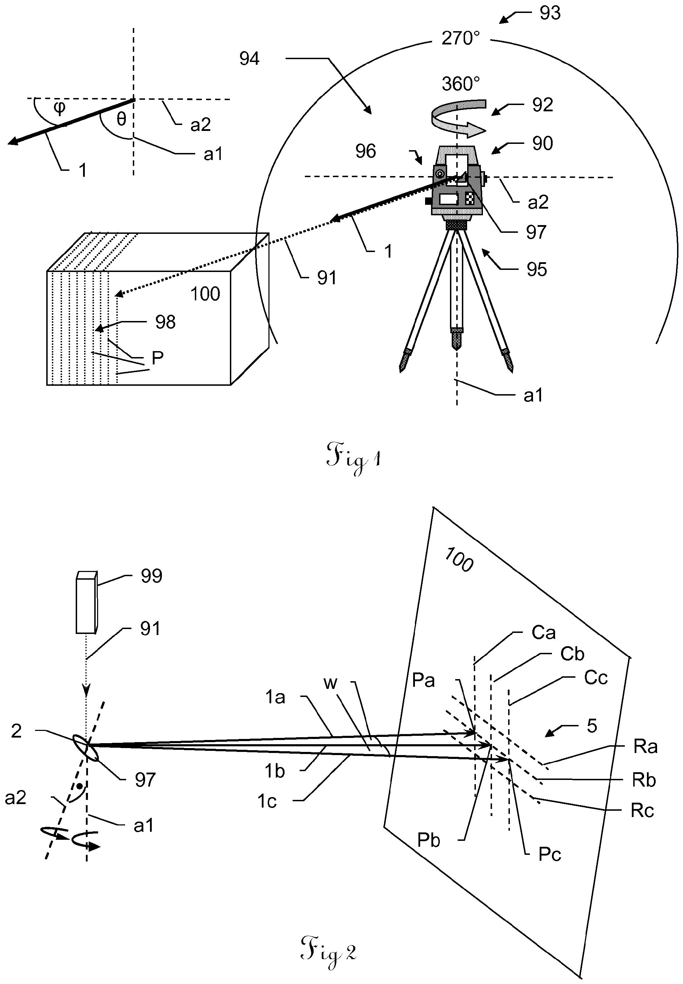

Figur 1 zeigt ein stationäres Vermessungsgerät 90 mit Scanfunktionalität zum Aufnehmen von Objektoberflächen 100, z.B. ausgebildet als Laserscanner. Hierbei ist das Gerät ausgebildet zum Aussenden von Messstrahlung 91 gemäss einer bestimmten Messrichtung 1, Empfang von von der Oberfläche 100 reflektierter Messstrahlung 91 und deren Auswertung, z.B. mittels Laufzeit- oder Phasendifferenzverfahren. Zum scannenden Abtasten einer Objektoberfläche 100 wird die Messstrahlung 91 fortlaufend verschwenkt und sukzessive in kurzen Zeitabständen jeweils wenigstens ein Messwert aufgenommen, darunter jedenfalls eine Entfernung zum jeweiligen Objektpunkt P, so dass eine Vielzahl von Messrichtungen 1 vorliegt und eine Vielzahl von Punkten 98 der Objektoberfläche 100 gemessen wird, so dass eine Vielzahl von Einzelmessdaten vorliegen, die untereinander verbunden sind und die Scandaten bilden. Die Messrichtungen 1 liegen beispielsweise als Elevations- oder Polarwinkel θ und Horizontal- oder Azimutwinkel ϕ vor (siehe Darstellung links in Figur 1) und sind z.B. über Winkelsensoren ermittelt. Die Winkel θ, ϕ bilden einen Winkelraum. Neben dem Entfernungsmesswert wird optional beispielsweise ein Helligkeits- oder Intensitätswert aufgenommen. Die Helligkeit ist ein Graustufenwert, welcher beispielsweise durch Integration der bandpass-gefilterten und verstärkten Messstrahlung über eine dem Objektpunkt zugeordnete Messperiode ermittelt wird.

Das Verschwenken erfolgt dabei wie dargestellt beispielsweise, indem ein Oberteil 96 des Vermessungsgeräts 90 gegenüber einer Basis -relativ langsam- um eine erste, vertikale Achse a1 schrittweise oder kontinuierlich rotiert wird, so dass die Messstrahlung 91 in der Horizontalen verschwenkt wird und sich die Vielzahl von Messrichtungen 1 untereinander in der horizontalen Ausrichtung unterscheiden, und indem ein verschwenkbares optisches Bauteil 97, z.B. ein Schwenkspiegel, -relativ schnell- um eine horizontale Achse a2 rotiert wird, so dass die Messstrahlung 91 in der Vertikalen verschwenkt wird und sich die Vielzahl von Messrichtungen 1 untereinander zusätzlich in der vertikalen Ausrichtung unterscheiden. Dadurch wird die Objektoberfläche 100 z.B. mit einem Linienraster wie dargestellt mit einer vorbestimmten Punktdichte oder Scanauflösung 98 gescannt. Das Scannen erfolgt dabei innerhalb eines vorbestimmten Scanbereichs 94, dessen Grenzen durch den horizontale und vertikale Verschenkungsbreite festgelegt ist. Bevorzugt beträgt der Scanbereich 94 in der Horizontalen 360°, also eine vollständige Umdrehung um die vertikale Achse a1, und in der Vertikalen z.B. 270°, so dass ein kugelförmiger Scanbereich 94 vorliegt, welcher beinahe den gesamten Umgebungsbereich in alle Raumrichtungen abbildet. Es sind aber auch beliebige andere Scanbereiche 94 möglich.

Figur 2 zeigt einen Ausschnitt aus dem Vermessungsgerät und der Objektoberfläche 100. Von einer Messeinheit 99, welche eine Messstrahlungsquelle, z.B. eine Laserdiode oder eine SLED, und einen Messstrahlungsdetektor aufweist, wird Messstrahlung 91 emittiert und mittels eines optischen Umlenkelements 97, welches im Beispiel um zwei zueinander orthogonale Achsen a1 und a2 drehbar ist, auf die Objektoberfläche 100 gelenkt. Durch gezieltes Bewegen der Umlenkoptik 97 wird die Messstrahlung 91 über die Objektoberfläche 100 verschwenkt. Durch gleichschrittiges Erfassen von Messdaten durch die Messeinheit 99 sind Messrichtungen 1a, 1b, 1c festgelegt, welche vom gleichen Messbezugspunkt 2 ausgehen und zumindest idealerweise gleichen Winkelabstand zueinander aufweisen (im Beispiel ist der horizontale Winkelabstand w eingezeichnet). Zu einer jeweiligen Messrichtung 1a-c ist also je wenigstens ein Messwert erfasst und mit der jeweiligen Messrichtung 1a-c verknüpft. Der wenigstens eine Messwert ist dabei jedenfalls ein Entfernungsmesswert zu einem Punkt Pa, Pb, Pc der Objektoberfläche, welcher durch Auswertung von mit dem Messstrahlungsdetektor detektierter reflektierter Messstrahlung 91 bestimmt ist. Durch die vorliegende Verknüpfung jeweils von Entfernung mit Richtung als Einzelmessdaten, bezogen auf einen gemeinsame Messbezugspunkt, zu einer Vielzahl von Punkten ist aus den Scandaten eine die Objektoberfläche repräsentierende 3D-Punktwolke generierbar. Neben dem Entfernungsmesswert weisen die jeweiligen Einzelmessdaten optional wenigstens einen weiteren Messwert auf, welcher zu einer jeweiligen Messrichtung 1a-c erfasst und mit dieser verknüpft ist. Solche Messwerte sind beispielsweise die empfangene Intensität der Messstrahlung 91, Daten zur Messgenauigkeit oder ein jeweiliges Rauschmass.

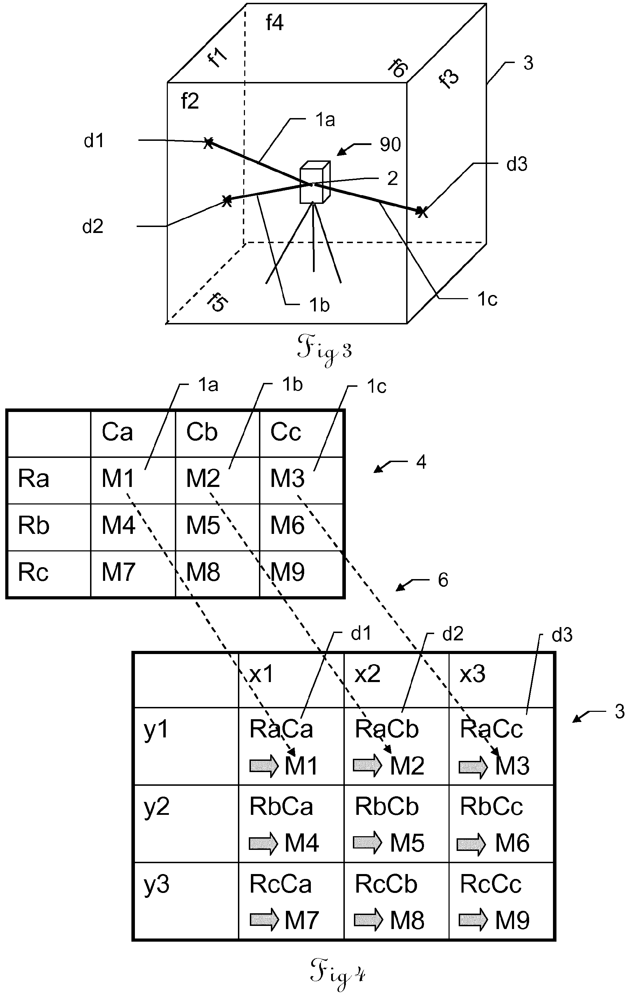

Durch die gleichmässige, gleichschrittige Aufnahme von Einzelmessdaten wird durch die Messrichtungen 1a-c ein regelmässiges Raster 5 gebildet, welchem Zeilen Ra, Rb, Rc und Spalten Ca, Cb, Cc zugeordnet werden. Entsprechend werden die Scandaten in einer Matrix organisiert, d.h. in einer Tabelle mit Spalten- und Zeilenindex verwaltet werden. Jedes Feld der Matrix, welches jeweils den oder die Messwerte einer jeweiligen Einzelmessung enthält oder auf diese verweist, entspricht somit einer der Messrichtungen 1a-c (siehe Figur 4).

Figur 3 zeigt, wie das Verfahren zur Darstellung der Scandaten erfindungsgemäss prinzipiell erfolgt. Die Darstellung erfolgt mittels einer als cube map ausgebildeten image map 3 als Würfeldarstellung. Das Zentrum des Würfels ist dabei identisch mit dem Messbezugspunkt 2, so dass das Vermessungsgerät 90 als im Zentrum des Würfels stehend angesehen werden kann. Die cube map 3 weist dabei eine Anzahl von map-Punkten auf, wovon beispielhaft drei Punkte d1, d2 und d3 dargestellt sind, welche sich auf drei verschiedenen der sechs Würfelseiten f1-f6 befinden. Die Zuordnung von darzustellendem Messwert zu map-Punkt erfolgt nun erfindungsgemäss unmittelbar anhand der Messrichtung. Beispielhaft ist dies anhand der drei map-Punkt d1-d3 dargestellt: dem Punkt d1 ist die Messrichtung 1a zugeordnet, dem Messpunkt d2 die Messrichtung 1b und dem Messpunkt d3 die Messrichtung 1c. Die Zuordnung Einzelmessdaten - image map-Punkte erfolgt also ohne Berücksichtigung der Entfernung zum jeweiligen Objektoberflächenpunkt Pa-Pc, welcher mit der jeweiligen Messrichtung 1a-1c verknüpft ist (vgl. Figur 2), sondern allein anhand der jeweiligen Messrichtung 1a-c, unabhängig von den mit den Messrichtungen 1a-c verknüpften Messwerten bzw. Objektpunkten. Der mit einer jeweiligen Messrichtung 1a-c verknüpften Messwert selbst fliesst also nicht in die Erzeugung einer image map ein, sondern werden aufgrund der Zuordnung einem jeweiligen map-Punkt zugeordnet. Sind mit einer Messrichtung jeweils mehr als ein Messwert verknüpft, z.B. neben dem Entfernungsmesswert auch ein Rauschmass oder die Intensität der empfangenen Messstrahlung, werden diese als separate Layer gehandhabt. Die mittels des erfindungsgemässen Verfahrens erstellte cube map 3 erlaubt eine unmittelbar an den Scan erfolgende verzerrungsfreie Darstellung (oder sogar noch während des Scans erfolgende Darstellung für bereits gescannte Objektpunkte bzw. Teilbereiche) und somit auch eine visuelle Kontrolle der Scandaten durch den Benutzer, wodurch z.B. noch vor Ort eine Überprüfung auf Vollständigkeit des Scans erfolgen kann.

Die Darstellung der Scandaten erfolgt anschliessend z.B. auf einer Anzeigeeinheit (GUI) des Vermessungsgeräts selbst oder bevorzugt auf einer augmented-reality-Brille oder einem Head-Up-Display, welche z.B. mit dem Vermessungsgerät verbunden sind oder einem Tablet oder Smartphone. Solche externen Geräte bieten u.a. den Vorteil einer übersichtlicheren Darstellung des Scans im Vergleich zu einem Vermessungsgerätdisplay. Vorzugsweise erfolgt bei einer Darstellung mittels eines externen Geräts eine automatische Anpassung der Darstellung, z.B. durch eine automatische Anpassung der Helligkeit je nach Blickfeld, wozu beispielsweise eine mit dem Vermessungsgerät verbundene Kamera oder auch eine Kamera des externen Geräts selbst die notwendige Information über die Lichtverhältnisse im Blickfeld liefert. Alternativ oder zusätzlich erfolgt eine Erkennung der Ausrichtung des Geräts und Anpassung des dargestellten Blickfelds oder Ausschnitts des gescannten Bereichs. Die Anzahl der Punkte d1-d3 einer image map 3 ist dabei abhängig von einer vorbestimmten Anzeigeauflösung, die wiederum abhängig sein kann von der beabsichtigten Anzeigeeinheit. D.h. je grösser die Anzeigeauflösung desto grösser ist die Anzahl der Punkt der cube map 3 und desto höher ist die Anzeigepunktedichte pro Würfelfläche f1-f6.

Figur 4 zeigt schematisch eine erfindungsgemässe Zuordnung mittels Tabellen. Die Figur 4 zeigt zum einen die Matrix 4 mit den Zeilen Ra-Rc und den Spalten Ca-Cc, in der die Scandaten gemäss des Scanrasters organisiert sind. Die einzelnen Felder der Matrix 4 stehen für eine jeweilige Messrichtung, von denen auszugsweise die Messrichtungen 1a-c angezeigt sind, und beinhalten die mit der jeweiligen Messrichtung verknüpften Messwerte M1-M9. Figur 4 zeigt weiter die image map 3 in Tabellenform, die in Zeilen- und Spaltenform die map-Punkte organisiert (jedes Feld steht für einen map-Punkt), von denen auszugsweise die Punkte d1-d3 angezeigt sind. Die Zuordnung 6 von Messpunkt zu map-Punkt erfolgt nun, indem die image map-Tabelle 3 für jeden map-Punkt die Indizes der korrespondierenden Messrichtungen enthält, wodurch jedem map-Punkt ein Messwert M1-M9 zugeordnet ist. Beispielsweise ist das image map-Feld x1y1 bzw. der map-Punkt d1 mit der Messrichtung 1a assoziiert, so dass der Messwert M1 dem map-Punkt d1 zugeordnet wird, das image map-Feld x2y1 bzw. der map-Punkt d2 ist mit der Messrichtung 1b assoziiert, so dass der Messwert M2 dem map-Punkt d2 zugeordnet wird usw.

Ist mit einer Messrichtung 1a-c mehr als eine Messwert M1-M9 verknüpft, also beispielsweise neben dem Entfernungsmesswert ein Rauschmass oder auch ein Messwert wie eine Scandatendichte, so werden diese ebenfalls der jeweiligen image map-Feld zugeordnet. Zudem werden in einer Fortbildung des Verfahrens Metadaten wie Textfiles, Bilder, CAD-Daten, Punktkoordinaten oder Abstandswerte zwischen ermittelten Koordinaten von Objektpunkten mit einer Messrichtung 1a-c bzw. einem image map-Punkt d1-d3 verknüpft. Dies erfolgt beispielsweise indem ein Benutzer ein map-Punkt d1-d3, welcher auf einer Anzeigeeinheit angezeigt wird, markiert und mit diesem Punkt ein Text oder Bild verknüpft. Diese Verknüpfung wird als zusätzlicher Layer der image map 3 gespeichert, so dass sie - vorzugsweise zusammen mit einer weiteren Layer- grafisch darstellbar ist.

Da bei einem vorbestimmten Scanbereich und einer vorbestimmten Scanauflösung das Scanraster und auch die Messrichtungen 1a-1c schon vorbekannt sind (zumindest prinzipiell im Form von Soll-Messrichtungen, abgesehen von Abweichungen vom Soll der tatsächlich erzielten Messrichtungen) und auch die image map 3 aufgrund der vorbestimmten Anzeigeauflösung und darzustellendem Scanbereich vorbestimmt ist, ist auch die Zuordnung 6 im hohen Grad vorbestimmt oder vorberechnet. Es muss also beispielsweise nicht erst aus den aufgenommenen Scandaten 3D-Objektpunktkoordinaten berechnet werden, um die Zuordnungsvorschrift zu erstellen. Erfolgt die Zuordnung 6 wie im Beispiel nach Figur 4 mit Hilfe von Tabellen, ist also die Verknüpfung der Felder der Matrix 4 mit den Feldern der image map 3 von vorneherein, also bereits vor der Objektpunkte- oder Messwertaufnahme festgelegt, z.B. Verknüpfung des map-Felds des Index x1y1 (map-Punkt d1) mit dem Matrixfeld RaCa (Messrichtung 1a). Es müssen dann lediglich die durch den Scan ermittelten Messwerte M1-M9 in die Matrix 4 eingesetzt werden, wodurch die Messwerte M1-M9 aufgrund der vorbestimmten Zuordnung 6 auch einem jeweiligen image map-Punkt zugeordnet sind und auf einem Display dargestellt werden können. Das erfindungsgemässe Verfahren erfordert also verglichen mit Verfahren des SdT erheblich geringeren Rechenaufwand, was eine sofortige Darstellung der Scandaten ermöglicht, dies selbst mit einer vergleichsweise geringen Rechenleistung, wie sie in Laserscannern oder Totalstationen gegeben ist, so dass die Darstellung auch direkt auf einem Display solcher Vermessungsgeräte ermöglicht ist.

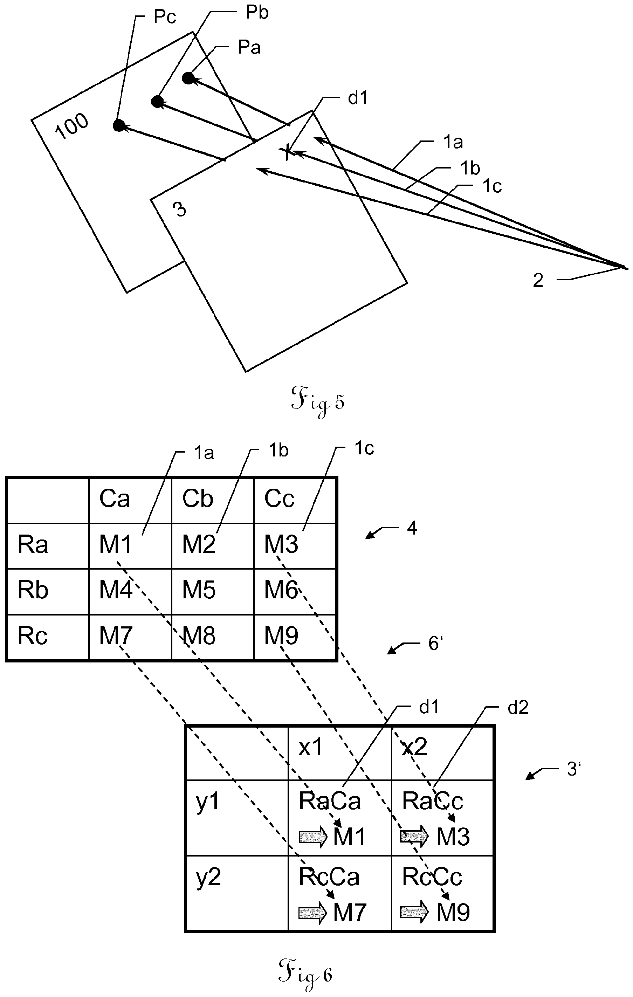

Figur 5 stellt schematisch eine Fortbildung des Verfahrens dar, bei dem erfolgt die Zuordnung angepasst an die vorbestimmte Anzeigeauflösung erfolgt, indem die Anzahl der für die Zuordnung herangezogenen Messrichtungen gleich der Anzahl der Würfelpunkte d1-d3 ist. Ist die Scanauflösung grösser als die gewünschte Anzeigeauflösung (was üblicherweise der Fall ist), so ist die Anzahl der tatsächlich vorliegenden (gemessenen) Messrichtungen 1a-c grösser als die Anzahl der für die Darstellung der Scandaten zu berücksichtigenden Messrichtungen 1a-c. Es werden also nicht alle aufgrund des Scans vorliegenden Messrichtungen benutzt, sondern wie in Figur 5 dargestellt beispielsweise nur jede zweite (wenn doppelt so viele gemessene Messrichtungen wie Darstellungspunkte vorliegen). Die Figur 5 zeigt einen Ausschnitt aus der Objektoberfläche 100, auf der drei Oberflächenpunkte Pa-Pc vermessen sind, welche mit den jeweiligen Messrichtungen 1a-c verknüpft sind, welche vom Messbezugspunkt 2 ausgehen. Die Scanauflösung ist höher als die gewünschte Anzeigeauflösung und damit ist die Anzahl der Messpunkte Pa-Pc höher als die Anzahl der darzustellenden map-Punkte der map 3, von denen ein Punkt d1 beispielhaft dargestellt ist. Es wird also aus allen Messrichtungen 1a-c ausgewählt und z.B. die Messrichtung 1b für die Zuordnung verwendet, da diese dem Punkt d1 am nächsten liegt, wohingegen die Messrichtungen 1a und 1c für die Zuordnung unberücksichtigt bleiben. Dementsprechend wird der der Messwert des Oberflächenpunkts Pb dem map-Punkt d1 zugeordnet und schliesslich als Helligkeits- oder Farbwert auf einem Display dargestellt, die Messwerte der Punkte Pa und Pc bleiben für die Darstellung der Scandaten unberücksichtigt.

Anstelle einer solchen simplen regelmässigen Ausdünnung oder Auflösungsverringerung anhand der einem jeweiligen map-Punkt am nächsten liegenden Messrichtung wird alternativ aus einer Gruppe von Messrichtungen, die z.B. innerhalb eines definierten Winkel- oder Richtungsbereichs liegen, diejenige Messrichtung ausgewählt, mit welcher der Messwert mit der höchsten Qualität und/oder Informationsgehalt verknüpft ist, z.B. also derjenige Entfernungswert, welcher am genausten ist. Ist im Beispiel der Figur 5 der zu dem Objektpunkt Pa oder zur Messrichtung 1a gehörige Messwert wesentlich genauer als derjenige vom Punkt Pb bzw. Richtung 1b, wird die Messrichtung 1a für die Zuordnung herangezogen. Ebenso wird zusätzlich oder alternativ verfahren, wenn der zum Objektpunkt Pa gehörige Messwert einen wesentlich höheren Zugewinn an Oberflächeninformation ergibt als der Objektpunkt Pb, z.B. weil der Punkt Pa an einer Objektkante liegt, der Punkt Pb jedoch in einer Objektfläche, die durch weitere aufgenommene Oberflächenpunkte wie Pc bereits ausreichend bekannt ist bzw. beschrieben wird. Objektpunkt Pa-Pc, die zu strukturreichen Oberflächenabschnitten gehören, weisen i.d.R. einen hohen Informationsgehalt auf, wohingegen Punkt Pa-Pc, die auf gleichförmigen, ebenen Oberflächen liegen einen geringen Informationsgehalt aufweisen (ein Ebene ist idealerweise bereits durch drei Punkte ausreichend bekannt). Bei einer Scanauflösung, die sehr viel höher ist als die Anzeigeauflösung, sind auch die Objektpunktedichte und die Messrichtungsdichte sehr viel höher als die map-Punktedichte, so dass die Abweichungen z.B. zwischen den Messrichtungen 1a und 1b praktisch vernachlässigbar sind.

Deswegen ist innerhalb gewisser Grenzen eine derartige Auswahl anhand von Qualitätskriterien praktisch nicht mit Nachteilen hinsichtlich der Darstellung und Auswertung der Scandaten anhand der Darstellung verbunden. Die qualitätsabhängige Zuordnung umfasst optional, dass der Scanbereich in eine Anzahl von Teilbereiche aufgeteilt wird, wobei die Anzahl der Teilbereiche der Anzahl der image map-Punkte entspricht und jeweils diejenigen Messrichtungen ausgewählt werden, welche innerhalb jeweiliger Teilbereiche im Vergleich mit den weiteren Einzelmessdaten der jeweiligen Teilbereiche die höchste Qualität aufweisen.

Scandaten werden oft mit einer derart hohen Scanauflösung aufgenommen, dass deren Feinheit in einer visuellen Darstellung sowieso nicht wahrnehmbar ist und auch für die Auswertung der Scandaten oft nicht von Relevanz ist. Deswegen ist generell eine erfindungsgemässe Verkleinerung der Scanauflösung auf die Anzeigeauflösung praktisch nicht mit Nachteilen verbunden. Hingegen bietet diese Verfahrensweise Vorteile hinsichtlich des Scandatenaufkommens, da dieses ohne praktische Nachteile bei der visuellen Wahrnehmung der Scandaten und Scandatenauswertung vermindert werden kann, was eine schnellere Verarbeitung der Scandaten, z.B. für eine Darstellung oder Bearbeitung noch am Ort des Scannens, und für einen drahtlosen Transfer der Daten von Vermessungsgerät an ein externes Datenverarbeitungsgerät wie z.B. ein Smartphone oder Tablet ermöglicht.

Das so verringerte Datenaufkommen ermöglicht z.B., dass das oben beschriebene Einfügen von Metadaten von einem weiteren, sich z.B. an einem entfernten Ort befindenden, Benutzer vorgenommen werden kann, der den verringerte Scandatensatz unmittelbar nach dem Scan zugesandt bekommen hat. Zudem können als weiterer optionaler und vorteilhafter Schritt die so ergänzten Scandaten oder Teile davon wieder zurück an das Vermessungsgerät transferiert werden, und beispielsweise anschliessend dem ersten Benutzer auf einem Display (des Vermessungsgerät oder z.B. eines Smartphones vor Ort) die so ergänzten Scandaten dargestellt werden. Beispielsweise wird so dem Benutzer vor Ort, der den Scan durchführt, Bereiche angezeigt werden, die unvollständig, unzureichend oder fehlerhaft aufgenommen und deshalb sind (erneut) zu scannen sind. Somit erlaubt das erfindungsgemässe Verfahren eine rasche (erste) Auswertung der Scandaten, wodurch sich z.B. Fehler oder Nachbesserungsbedarf eines Scans rasch erkennen und noch vom Benutzer vor Ort sofort beheben lassen, was zu erheblicher Senkung von Kosten- und Zeitaufwand führt.

Zudem erleichtert eine derartige Verringerung des Scandatenaufkommens dessen Darstellung und Verarbeitung noch weiter. Beispielsweise erfolgt in einer Fortbildung des Verfahrens ein Verknüpfen von Scandatensätzen von unterschiedlichen (benachbarten) Standorten oder Scanbereichen, entweder manuell, indem der Benutzer korrespondierende Punkte oder Teilbereiche der Scanbereiche in der Darstellung markiert oder automatisch, wobei hierfür zusätzliche Positionsdaten herangezogen werden, welche mit einer Sensoreinheit (z.B. eine IMU oder ein GPS-Empfänger) des Vermessungsgeräts ermittelt sind.

Figur 6 illustriert eine an eine vorbestimmte Anzeigeauflösung angepasste Zuordnung 6' mit gleichmässiger Verkleinerung der Scanauflösung auf die Anzeigeauflösung im Falle einer Zuordnung 6' mittels Matrix bzw. Tabelle. Figur 6 zeigt wie Figur 4 eine Matrix 4 mit den Messwerten M1-M9, welche mit den jeweiligen Messrichtungen verknüpft sind (auszugsweise Messrichtungen 1a-c markiert) und eine image map 3' in Tabellenform. Im Unterschied zur Figur 4 ist die Anzeigeauflösung niedriger als die Scanauflösung, so dass die Tabelle 3' nur noch vier statt neun Felder aufweist und damit weniger als die Matrix 4. Es wird nicht jedem Messwert M1-M9 ein map-Punkt zugeordnet, sondern nur denjenigen jeder zweiten Spalte und Zeile. Beispielsweise wird also der Messwert M1 dem Punkt d1 mit dem Index x1y1 zugeordnet und der Messwert M3 dem Punkt d2 mit dem Index x2y1 (anstelle des Messwerts M2, wie es im Beispiel der Figur 4 mit gleicher Scan- und Anzeigeauflösung der Fall ist) .

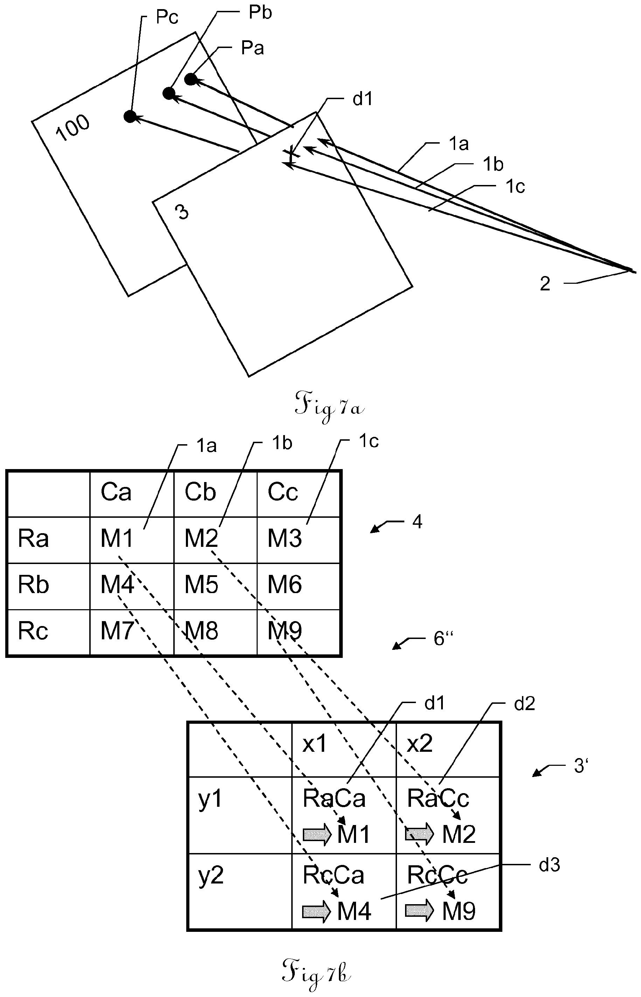

Die Figuren 7a und 7b zeigen schematisch eine weitere Fortbildung des erfindungsgemässen Verfahrens. Hierbei werden im Rahmen des Verfahrens in der Zuordnungsvorschrift systematische, also reproduzierbare, Gerätefehler berücksichtigt. Bei derartigen Fehlern eines Vermessungsgeräts mit Scanfunktionalität handelt es sich vor allem um Achsenfehler oder auch Fehler bedingt durch Latenzzeiten in der Synchronisation zwischen Winkelmessung (zur Bestimmung der Messrichtungen) und Entfernungsmessung. Aufgrund der Reproduzierbarkeit werden diese bei der Erzeugung der image map mittels der Zuordnungsvorschrift berücksichtigt, so dass die Darstellung der Scandaten damit bereits messfehlerkorrigiert erfolgt. Vorzugsweise werden damit Gerätefehler kompensiert, welche Winkelmessungen betreffen, mittels denen die Messrichtungen bestimmt werden. Dabei werden optional die Gerätefehler durch einen Kalibriervorgang individuell für das Vermessungsgerät bestimmt und anhand der dadurch ermittelten Kalibrierparameter in der Zuordnungsvorschrift berücksichtigt. Die Gerätefehler lassen sich dabei im Wesentlichen durch folgende Kalibrierparameter darstellen: Indexfehler des 2-Achsen-Neigungssensors, beziehungsweise der Stehachsen-Schiefe, Indexfehler (Winkeloffset) des Vertikal-Winkelsensors, Kollimationsfehler der Ziellinie und Kippachsen-Schiefe. Der Kalibriervorgang und Berücksichtigung der Kalibrierparameter in der Zuordnungsvorschrift erfolgt dabei vor Auslieferung des Vermessungsgeräts werksseitig. Zusätzlich erfolgt optional eine (Nach-)Kalibrierung und Aktualisierung der Kalibrierparameter bzw. der Vorschrift benutzerseitig, z.B. vor jedem Scanvorgang.

In der Figur 7a wird die Berücksichtigung eines Gerätefehlers in der Zuordnungsvorschrift schematisch dargestellt. Aufgrund des Gerätsfehlers, z.B. eines Achsenfehlers, weicht die tatsächlich erzielte Verteilung der Messrichtungen 1a-1c und damit die Verteilung der Objektpunkt Pa-PC vom idealen regelmässigen Raster ab (vgl. Figur 5). Deshalb ist in diesem Fall nicht wie im Idealfall nach Figur 5 die Messrichtung 1b dem map-Punkt d1 am nächsten, sondern die Messrichtung 1c. Deshalb erfolgt die Zuordnung zum map-Punkt d1 anhand der Messrichtung 1c (und nicht anhand der Messrichtung 1b, wie es ohne Gerätefehler der Fall wäre). Entsprechend wird der Messwert, der zur Messrichtung 1c bzw. dem Objektpunkt Pc gehörig ist, dem map-Punkt d1 zugeordnet.

Figur 7b stellt eine solche messfehlerkorrigierende Zuordnung 6" in Tabellenform dar. Figur 7b basiert auf Figur 6, welche eine auswählend Zuordnung 6' angepasst an eine niedrigere Anzeigeauflösung darstellt, bei der einfach jede zweite Messrichtung bzw. jede zweite Spalte und Zeile des Rasters unberücksichtigt bleibt. Die nun dargestellte Zuordnung 6" basiert nach wie vor auf diesem Prinzip, verfeinert es jedoch, in dem im Unterschied zu Figur 6 eine Gerätefehlerkompensation erfolgt, welche die aufgrund der Berücksichtigung der bekannten Messfehler tatsächlich am besten passende Messrichtung auswählt. Dies führt dazu, dass z.B. nicht mehr der Messwert M3 dem map-Punkt d2 zugeordnet wird, wie es ohne Gerätefehler der Fall wäre, sondern der Messwert M2, und anstelle des Messwerts M7 der Messwert M4 dem map-Punkt d3 zugeordnet wird. Somit erfolgt die Darstellung des map-Punkts d1 auf einem Display gemäss des Messwerts M2 und die des map-Punkts d3 gemäss des Messwerts M4.

## Patentansprüche

1. Verfahren zur visuellen Darstellung von Scandaten, welche aufgenommen sind mit einem, insbesondere stationären, Vermessungsgerät (90) mit Scanfunktionalität, insbesondere einem Laserscanner oder einer Totalstation, zum Aufnehmen von Objektoberflächen (100) mittels Messstrahlung (91), insbesondere Laserstrahlung, wobei
• die Scandaten eine Vielzahl von Einzelmessdaten aufweisen, wobei die Einzelmessdaten jeweils wenigstens einen mit einer jeweiligen Messrichtung (1, 1a-1c) verknüpften Messwert (M1-M9) aufweisen, darunter jeweils einen mittels der Messstrahlung (91) gemessenen Entfernungsmesswert zu einem in Messrichtung (1, 1a-1c) liegenden Oberflächenpunkt (P, Pa-c), wobei
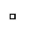 alle Messrichtungen (1, 1a-1c) von einem gemeinsamen Messbezugspunkt (2) ausgehen und
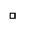 die Messrichtungen ((1, 1a-1c) derart verschieden voneinander sind, dass ein vorbestimmter Scanbereich (94) mit einer vorbestimmten Scanauflösung abgedeckt ist, insbesondere wobei der Scanbereich (94) in der Horizontalen 360° und in der Vertikalen etwa 270° umfasst,
• die Darstellung der Scandaten mittels einer image map (3, 3') mit einer von einer vorbestimmten Anzeigeauflösung abhängigen Anzahl von map-Punkten (d1-d3) erfolgt,
mit
Darstellung der Scandaten, insbesondere Erzeugung der image map (3, 3'), mittels einer Zuordnungsvorschrift zur Zuordnung (6, 6', 6") von Messwert (M1-M9), insbesondere Entfernungswert, zu map-Punkt (d1-d3), wobei die Zuordnung (6, 6', 6") unmittelbar anhand der jeweiligen mit dem Messwert (M1-M9) verknüpften Messrichtung (1, 1a-1c) erfolgt,
**dadurch gekennzeichnet, dass**
durch die Messrichtungen (1, 1a-1c) ein regelmässiges Raster (5) gebildet ist und die Einzelmessungen in einer das regelmässige Raster (5) abbildenden Matrix (4) mit Spalten- und Zeilenindex abgelegt sind, wobei jedem map-Punkt (d1-d3) ein Feld der Matrix (4) zugeordnet ist.

2. Verfahren nach Anspruch 1,
**dadurch gekennzeichnet, dass**
• die Darstellung
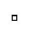 als Panoramadarstellung erfolgt und/oder
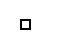 mittels einer als cube map ausgebildeten image map (3, 3') als, insbesondere verzerrungsfreie, Würfeldarstellung erfolgt und/oder
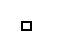 mittels einer Anzeigeeinheit mit einer Anzahl flächig angeordneter Anzeigepunkte erfolgt und dass abhängig von einem jeweiligen anzuzeigenden Blickfeld (FoV) als Ausschnitt aus der image map (3, 3') einem jeden Anzeigepunkt mittels der Zuordnungsvorschrift ein einen Messwert (M1-M9) darstellender Helligkeits- und/oder Farbwert zugeordnet ist, wobei der Messwert (M1-M9) einem der im Blickfeld liegenden aufgenommenen Oberflächenpunkte (P, Pa-Pc) zugehörig ist, und/oder
• das Erzeugen der image map (3, 3') durch eine Steuer- und Auswerteeinheit des Vermessungsgeräts (90) erfolgt.

3. Verfahren nach einem der vorherigen Ansprüche,
**dadurch gekennzeichnet, dass**
in der Zuordnungsvorschrift systematische Gerätefehler, insbesondere Achsenfehler, des Vermessungsgeräts (90) berücksichtigt sind, so dass die Darstellung der Scandaten aufgrund der fehlerkorrigierenden Zuordnungsvorschrift gerätefehlerkorrigiert erfolgt.

4. Verfahren nach Anspruch 3,
**dadurch gekennzeichnet, dass**
die systematischen Gerätefehler
• für das Vermessungsgerät (90) individuell mittels eines Kalibriervorgangs in Form von Kalibrierparametern bestimmt sind und die Gerätefehler in der Zuordnungsvorschrift anhand der Kalibrierparameter berücksichtigt sind und/oder
• Winkelmessungen zur Bestimmung der Messrichtungen (1, 1a-1c) betreffen.

5. Verfahren nach einem der vorherigen Ansprüche,
**dadurch gekennzeichnet, dass**
die Zuordnung (6, 6', 6") angepasst an die gewählte Anzeigeauflösung erfolgt, insbesondere indem die Scanauflösung über den gesamten Scanbereich (94) durch Auswahl von Messrichtungen (1, 1a-1c) und damit von Einzelmessdaten aus der Vielzahl der Einzelmessdaten im Rahmen der Zuordnung (6, 6', 6") auf die Anzeigeauflösung verringert wird, im Speziellen wobei die Auswahl erfolgt indem
• einem jeden map-Punkt (d1-d3) der Messwert (M1-M9) der nächstliegenden Messrichtung (1, 1a-1c) zugeordnet wird und/oder
• einem jedem map-Punkt (d1-d3) der Messwert (M1-M9) derjenigen der naheliegenden Messrichtungen (1, 1a-1c) zugeordnet wird, welcher eine vergleichsweise hohe Messwertqualität und/oder einen vergleichsweise hohen Informationsgehalt aufweist.

6. Verfahren nach Anspruch 5,
**dadurch gekennzeichnet, dass**
basierend auf der Zuordnungsvorschrift und angepasst an die gewählte Anzeigeauflösung ein verkleinerte Scandatensatz erstellt wird und dieser drahtlos an ein externes Datenverarbeitungsgerät übertragen wird, insbesondere wobei
• das Übertragen erfolgt, indem der verkleinerte Scandatensatz zuerst vom Vermessungsgerät (90) an ein Datenübertragungsgerät, insbesondere einem Field-Controller, Tablet oder Smartphone, vor Ort übermittelt wird und vom Datenübertragungsgerät per Funknetz, insbesondere per LTE, an das externe Datenverarbeitungsgerät übertragen wird, und/oder
• mittels des externen Datenverarbeitungsgeräts ein Bearbeiten des Scandatensatzes und Erstellen eines bearbeiteten Scandatensatzes erfolgt und zumindest Teile des bearbeiteten Scandatensatz zurück übertragen werden, und insbesondere bei der Darstellung der Scandaten durch eine Anzeigeeinheit des Vermessungsgeräts (90) berücksichtigt werden.

7. Verfahren nach einem der vorherigen Ansprüche,
**dadurch gekennzeichnet, dass**
• der Messbezugspunkt (2)
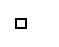 ein Zentrum des Vermessungsgeräts (90) ist und/oder
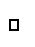 bei Vorliegen einer als cube map ausgebildeten image map (3, 3') dem Mittelpunkt des Würfels entspricht
und/oder
• die Messrichtungen (1, 1a-1c) in Form von Polar- und Azimutwinkel vorliegen.

8. Verfahren nach einem der vorherigen Ansprüche,
**dadurch gekennzeichnet, dass**
die Zuordnungsvorschrift als Look-Up-Tabelle ausgebildet ist, in der für jeden map-Punkt (d1-d3) direkt der oder die zugeordneten Messwerte (M1-M9) abrufbar sind.

9. Verfahren nach einem der vorherigen Ansprüche,
**dadurch gekennzeichnet, dass**
• eine automatische Anpassung der Darstellung erfolgt
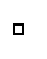 abhängig vom ausgewählten Blickfeld, insbesondere eine Anpassung der Helligkeit, und/oder
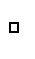 abhängig von der Ausrichtung einer darstellenden Anzeigeeinheit relativ zum Scanbereich (94), insbesondere eine Anpassung des dargestellten Blickfelds,
und/oder
• Metadaten, insbesondere Texte, Bilder, Voice-Memos, CAD-Daten, Punktkoordinaten oder eine aus wenigstens Einzelmessdaten abgeleitete Grösse, insbesondere eine Länge, Fläche oder ein Volumen, mittels eines Anzeigepunkts, insbesondere dauerhaft, mit einem map-Punkt (d1-d3) oder einem dem map-Punkt (d1-d3) zugeordneten Messwert (M1-M9) verknüpft werden und insbesondere kombiniert mit dem Messwert (M1-M9) darstellbar sind.

10. Verfahren nach einem der vorherigen Ansprüche,
**dadurch gekennzeichnet, dass**
die Darstellung vor Ort erfolgt, und zwar
• auf einer Anzeigeeinheit des Vermessungsgeräts (90) und/oder
• auf einem externen mit dem Vermessungsgerät (90) drahtlos oder drahtgebunden verbundenen Gerät, insbesondere
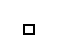 einer als augmented-reality-Brille ausgebildeten Anzeigeeinheit und/oder
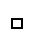 einer als Head-up-Display ausgebildeten Anzeigeeinheit und/oder
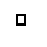 einem Datenverarbeitungsgerät mit Anzeigeeinheit, insbesondere einem Tablet oder Smartphone,
insbesondere wobei
• die Darstellung unmittelbar nach der Scandatenaufnahme oder bereits während der Scandatenaufnahme für bereits aufgenommene Scandaten erfolgt und/oder
• die Darstellung zur Kontrolle, insbesondere auf Vollständigkeit, der Scandaten dient.

11. Verfahren nach einem der vorherigen Ansprüche,
**dadurch gekennzeichnet, dass**
neben dem Entfernungsmesswert wenigstens einer der folgenden Messwerte mittels der Zuordnungsvorschrift einem Würfelpunkt zugeordnet werden und damit einzeln oder kombiniert mit anderen Messwerten darstellbar sind:
• Intensität der Messstrahlung,
• Rauschmass,
• Messgenauigkeit,
• Scandatendichte,
• Farbinformation zum Scanbereich, welche mit einer Kamera aufgenommen ist,
insbesondere wobei die unterschiedlichen Messwerte als unterschiedliche image map-layer bereitgehalten werden.

12. Verfahren nach einem der vorherigen Ansprüche,
**dadurch gekennzeichnet, dass**
ein Verknüpfen, insbesondere Grobausrichten zueinander, von zwei oder mehr an unterschiedlichen Standorten mittels des Vermessungsgeräts (90) aufgenommenen Scandatensätzen erfolgt, insbesondere wobei
• das Verknüpfen manuell anhand der Darstellung, insbesondere durch Markieren von Anzeigepunkten und/oder Anzeigebereichen auf einer darstellenden Anzeigeeinheit, erfolgt und/oder
• das Verknüpfen automatisch durch Heranziehung zusätzlicher Positionsdaten erfolgt, welche von einem Positionsmesser, insbesondere einer IMU, GPS-Empfänger und/oder Videotracker, des Vermessungsgeräts (90) bereitgestellt sind, und/oder
• anschliessend eine, insbesondere der visuellen Kontrolle dienende, Anzeige der verknüpften Scandatensätze auf einer Anzeigeeinheit erfolgt.

13. Computerprogrammprodukt, das auf einem maschinenlesbaren Träger gespeichert ist, oder Computer-Datensignal, verkörpert durch eine elektromagnetische Welle, mit Programmcode, der geeignet ist zur Durchführung des Verfahrens nach einem der Ansprüche 1 bis 12.

14. Vermessungssystem mit Scanfunktionalität, insbesondere mit einem als Laserscanner oder Totalstation ausgebildeten Vermessungsgerät, wobei das Vermessungssystem eine Steuer- und Auswerteeinheit aufweist,
**dadurch gekennzeichnet, dass**
die Steuer- und Auswerteeinheit zur Ausführung des Verfahrens nach einem der Ansprüche 1 bis 12 ausgebildet ist.

## Claims

1. Method for visually representing scanning data, which are recorded with an, in particular stationary, measurement device (90) having a scanning functionality, in particular a laser scanner or total station, for recording object surfaces (100) using measurement radiation (91), in particular laser radiation, wherein
• the scanning data have a multiplicity of individual measurement data, wherein the individual measurement data in each case have at least one measurement value (M1-M9) that is linked to a respective measurement direction (1, 1a-1c), including in each case a distance measurement value, measured by way of the measurement radiation (91), from a surface point (P, Pa-c) that is located in the measurement direction (1, 1a-1c), wherein
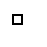 all measurement directions (1, 1a-1c) start from a common measurement reference point (2) and
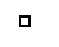 the measurement directions (1, 1a-1c) are different from one another such that a predetermined scanning region (94) with a predetermined scanning resolution is covered, in particular wherein the scanning region (94) covers 360° in the horizontal and approximately 270° in the vertical,
• the representation of the scanning data is effected using an image map (3, 3') with a number of map points (d1-d3) that is dependent on a predetermined display resolution, with representation of the scanning data, in particular generation of the image map (3, 3'), by way of an assignment rule for assignment (6, 6', 6") of measurement value (M1-M9), in particular distance value, to map point (d1-d3), wherein the assignment (6, 6', 6") is effected directly on the basis of the respective measurement direction (1, 1a-1c) that is linked to the measurement value (M1-M9),
**characterized in that**
a regular grid (5) is formed by way of the measurement directions (1, 1a-1c), and the individual measurements are stored in a matrix (4), imaging the regular grid (5), with a column and row index, wherein each map point (d1-d3) is assigned a field of the matrix (4).

2. Method according to claim 1,
**characterized in that**
• the representation
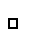 is effected as a panorama representation and/or
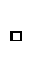 is effected by way of an image map (3, 3'), in the form of a cube map, as, in particular distortion-free, cube representation and/or
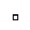 is effected using a display unit having a number of display points that are arranged over the surface, and **in that** a brightness and/or color value, which represents a measurement value (M1-M9), is assigned to each display point by way of the assignment rule in dependence on a respective field of vision (FoV) to be displayed as a section of the image map (3, 3'), wherein the measurement value (M1-M9) belongs to one of the recorded surface points (P, Pa-Pc) located in the field of vision,
and/or
• the generation of the image map (3, 3') is effected by way of a control and evaluation unit of the measurement device (90).

3. Method according to any one of the preceding claims,
**characterized in that**
systematic device errors, in particular axial errors, of the measurement device (90) are taken into consideration in the assignment rule, with the result that the representation of the scanning data is effected on the basis of the error-correcting assignment rule in a device-error-corrected fashion.

4. Method according to claim 3,
**characterized in that**
the systematic device errors
• for the measurement device (90) are determined individually by way of a calibration process in the form of calibration parameters, and the device errors are taken into consideration in the assignment rule on the basis of the calibration parameters, and/or
• relate to angular measurements for determining the measurement directions (1, 1a-1c).

5. Method according to any of the preceding claims,
**characterized in that**
the assignment (6, 6', 6") is effected adapted to the selected display resolution, in particular by way of the scanning resolution over the entire scanning region (94) being reduced to the display resolution by way of the selection of measurement directions (1, 1a-1c) and thus of individual measurement data from the multiplicity of the individual measurement data as part of the assignment (6, 6', 6"), specifically wherein the selection is effected by way of
• the measurement value (M1-M9) of the closest measurement direction (1, 1a-1c) being assigned to each map point (d1-d3) and/or
• each map point (d1-d3) being assigned the measurement value (M1-M9) of that measurement direction of the close-by measurement directions (1, 1a-1c) which has a comparatively high measurement value quality and/or a comparatively high information content.

6. Method according to claim 5,
**characterized in that**
a reduced scanning data set is created based on the assignment rule and adapted to the selected display resolution, and said set is transferred wirelessly to an external data processing device, in particular wherein
• the transfer is effected by way of the reduced scanning data set initially being transmitted from the measurement device (90) to a data transmission device, in particular a field controller, tablet or smartphone, in situ and being transferred from the data transfer device by way of radio network, in particular by way of LTE, to the external data processing device, and/or
• the scanning data set is edited and an edited scanning data set is created by way of the external data processing device, and at least parts of the edited scanning data set are transferred back and taken into consideration in particular in the representation of the scanning data by way of a display unit of the measurement device (90).

7. Method according to any of the preceding claims,
**characterized in that**
• the measurement reference point (2)
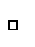 is a center of the measurement device (90) and/or
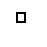 corresponds to the center point of the cube in the case of an image map (3, 3') being present in the form of a cube map
and/or
• the measurement directions (1, 1a-1c) are present in the form of polar and azimuth angles.

8. Method according to any of the preceding claims,
**characterized in that**
the assignment rule is in the form of a look-up table, in which the assigned measurement value or values (M1-M9) are directly retrievable for each map point (d1-d3).

9. Method according to any of the preceding claims,
**characterized in that**
• automatic adaptation of the representation is effected
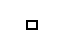 in dependence on the selected field of vision, in particular an adaptation of the brightness, and/or
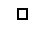 in dependence on the alignment of a representing display unit relative to the scanning region (94), in particular an adaptation of the represented field of vision,
and/or
• metadata, in particular texts, images, voice memos, CAD data, point coordinates or a variable derived from at least individual measurement data, in particular a length, area or a volume, is linked to a map point (d1-d3) or to a measurement value (M1-M9) that is assigned, in particular permanently, to the map point (d1-d3) by way of a display point and are representable in particular combined with the measurement value (M1-M9).

10. Method according to any of the preceding claims,
**characterized in that**
the representation is effected in situ, specifically
• on a display unit of the measurement device (90) and/or
• on an external device that is connected to the measurement device (90) wirelessly or in wire-bound fashion, in particular
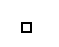 a display unit in the form of augmented reality spectacles and/or
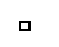 a display unit in the form of a head-up display and/or
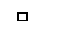 a data processing device with display unit, in particular a tablet or a smartphone,
in particular wherein
• the representation is effected immediately after the scanning data recording or already during the scanning data recording for scanning data which have already been recorded, and/or
• the representation serves for checking the scanning data, in particular for completeness.

11. Method according to any of the preceding claims,
**characterized in that**
in addition to the distance measurement value, at least one of the following measurement values is assigned to a cube point by way of the assignment rule and is thus representable individually or combined with other measurement values:
• intensity of the measurement radiation,
• noise factor,
• measurement accuracy,
• scanning data density,
• color information relating to the scanning region which is recorded using a camera,
in particular wherein the different measurement values are held as different image map layers.

12. Method according to any of the preceding claims,
**characterized in that**
linking, in particular mutual rough alignment, of two or more scanning data sets recorded using the measurement device (90) at different sites is effected, in particular wherein
• the link is effected manually on the basis of the representation, in particular by marking display points and/or display regions on a representing display unit, and/or
• the link is effected automatically by using additional positional data that are provided by a position measurement unit, in particular an IMU, a GPS receiver and/or a video tracker, of the measurement device (90), and/or
• this is followed by a display of the linked scanning data sets on a display unit, which in particular serves for visual checking.

13. Computer program product, stored on a machine-readable carrier, or a computer data signal, embodied by an electromagnetic wave, with program code, that is suitable for performing the method according to any one of Claims 1 to 12.

14. Measurement system having a scanning functionality, in particular having a measurement device in the form of a laser scanner or a total station, wherein the measurement system has a control and evaluation unit,
**characterized in that**
the control and evaluation unit is configured to perform the method according to any one of Claims 1 to 12.

## Revendications

1. **Procédé** pour la représentation visuelle de données de balayage qui sont enregistrées avec un appareil de mesure (90), en particulier stationnaire, avec une fonctionnalité de balayage, en particulier un scanner laser ou une station totale, pour enregistrer des surfaces d'objet (100) au moyen de rayonnement de mesure (91), en particulier rayonnement laser, cependant que
• les données de balayage présentent une multitude de données de mesure individuelles, cependant que les données de mesure individuelles présentent au moins une valeur de mesure (M1-M9) liée à une direction de mesure respective (1, 1a-1c) dont respectivement une valeur de mesure de distance mesurée au moyen du rayonnement de mesure (91) par rapport à un point de surface (P, Pa-c) situé dans la direction de mesure (1, 1a-1c), cependant que
□ toutes les directions de mesure (1, 1a-1c) partent d'un point de référence de mesure commun (2) et
□ les directions de mesure (1, 1a-1c) diffèrent tellement les unes des autres qu'une zone de balayage prédéterminée (94) est couverte avec une résolution de balayage prédéterminée, en particulier cependant que la zone de balayage (94) comprend environ 360° dans le sens horizontal et environ 270° dans le sens vertical,
• la représentation des données de balayage est effectuée avec une image map (3, 3') avec un nombre de points de carte (d1-d3) qui dépend d'une résolution d'affichage prédéterminée avec représentation des données de balayage, en particulier génération de l'image map (3, 3'), au moyen d'une règle d'affectation pour l'affectation (6, 6', 6") de la valeur de mesure (M1-M9), en particulier de la valeur de distance, au point de carte (d1-d3), cependant que l'affectation (6, 6', 6") se fait directement à l'aide de la direction de mesure (1, 1a-1c) liée à la valeur de mesure respective (M1-M9),
**caractérisé en ce**
**qu'**une grille régulière (5) est formée par les directions de mesure (1, 1a-1c) et les mesures individuelles sont stockées dans une matrice (4) qui représente la grille régulière (5), cependant qu'un champ de la matrice (4) est affecté à chaque point d'image (d1-d3).

2. Procédé selon la revendication 1,
**caractérisé en ce que**
• la représentation
□ est effectuée en tant que représentation panoramique et/ou
□ est effectuée au moyen d'une image map (3, 3') configurée comme cube map en tant que représentation de cube, en particulier sans distorsion, et/ou
□ est effectuée au moyen d'une unité d'affichage avec un nombre de points d'affichage alignés en nappe et qu'en fonction d'un champ de vision (FoV) respectif devant être affiché en tant que découpe de l'image map (3, 3') une valeur de luminosité et/ou de couleur qui représente une valeur de mesure (M1-M9) est affectée à chaque point d'affichage au moyen de la règle d'affectation, cependant que la valeur de mesure (M1-M9) est associée à l'un des points de surface (P, Pa-Pc) enregistré situé dans le champ de vision,
et/ou
• la génération de l'image map (3, 3') est effectuée par une unité de contrôle et d'évaluation de l'appareil de mesure (90).

3. Procédé selon l'une des revendications précédentes,
**caractérisé en ce**
**qu'**il est tenu compte dans la règle d'affectation des erreurs d'appareil systématiques , en particulier des défauts d'axe, si bien que la représentation des données de balayage est effectuée avec les erreurs d'appareil corrigées en raison de la règle d'affectation qui corrige les erreurs.

4. Procédé selon la revendication 3,
**caractérisé en ce que** les erreurs d'appareil systématiques
• sont déterminées pour l'appareil de mesure (90) de manière individuelle sous forme de paramètres de calibration au moyen d'une opération de calibration et qu'il est tenu compte des erreurs d'appareil dans la règle d'affectation à l'aide des paramètres de calibration et/ou
• concernent des mesures d'angle pour déterminer les directions de mesure (1, 1a-1c).

5. Procédé selon l'une des revendications précédentes,
**caractérisé en ce que**
l'affectation (6, 6', 6") se fait en étant adaptée à la résolution d'affichage choisie, en particulier cependant que la résolution de balayage se fait sur toute la zone de balayage (94) par la sélection de direction de mesures (1, 1a-1c) et est ainsi réduite de données de mesure individuelles de la multitude des données de mesure individuelles dans le cadre de l'affectation (6, 6', 6") à la résolution d'affichage, en particulier cependant que la sélection se fait
• cependant que la valeur de mesure (M1-M9) de la direction de mesure la plus proche (1, 1a-1c) est affectée à chaque point de carte (d1-d3) et/ou
• que la valeur de mesure (M1-M9) de celle des directions de mesure proches (1, 1a-1c) qui présente une qualité de valeur de mesure comparativement élevée et/ou un contenu informatif comparativement élevé est affectée à chaque point d'image (d1-d3).

6. Procédé selon la revendication 5
**caractérisé en ce que**,
sur la base de la règle d'affectation et de manière adaptée à la résolution d'affichage sélectionnée, un ensemble de données de balayage réduit est créé et celui-ci est transmis sans fil à un appareil externe de traitement des données, en particulier cependant que
• la transmission se fait, cependant que l'ensemble de données de balayage réduit est tout d'abord communiqué sur place par l'appareil de mesure (90) à un appareil de transmission des données, en particulier à un contrôleur de champ, une tablette ou un smartphone et est transmis par l'appareil de transmission des données par un réseau radio, en particulier par LTE, à l'appareil externe de traitement des données et/ou
• un traitement de l'ensemble des données de balayage et la création d'un ensemble de données de balayage traitées est créé au moyen de l'appareil externe de traitement des données et au moins des parties de l'ensemble de données de balayage traitées sont renvoyées et sont prises en compte, en particulier lors de la représentation des données de balayage par une unité d'affichage de l'appareil de mesure (90).

7. Procédé selon l'une des revendications précédentes,
**caractérisé en ce que**
• le point de référence de mesure (2)
□ est un centre de l'appareil de mesure (90) et/ou,
□ lors de l'existence d'une image map configurée comme cube map (3, 3'), correspond au centre du cube
et/ou
• les directions de mesure (1, 1a-1c) existent sous forme d'angle polaire et d'angle d'azimut.

8. Procédé selon l'une des revendications précédentes,
**caractérisé en ce que**
la règle d'affectation est configurée comme une table de conversion dans laquelle le ou les valeurs de mesure associées (M1-M9) peuvent être consultées pour chaque point d'image (d1-d3).

9. Procédé selon l'une des revendications précédentes,
**caractérisé en ce**
• **qu'**une adaptation automatique de la représentation est réalisée
□ en fonction du champ de vision sélectionné, en particulier une adaptation de la luminosité et/ou
□ en fonction de l'orientation d'une unité d'affichage qui représente par rapport à la zone de balayage (94), en particulier une adaptation du champ de vision représenté
et/ou
• des métadonnées, en particulier des textes, des images, des mémos vocaux, des données CAO, des coordonnées de points ou une grandeur dérivée d'au moins des données de mesure individuelles, en particulier une longueur, une surface ou un volume, sont associées au moyen d'un point d'affichage, en particulier de manière permanente, à un point d'image (d1-d3) ou à une valeur de mesure (M1-M9) associée au point d'image (d1-d3) et, en particulier, peuvent être représentées en étant combinées à la valeur de mesure (M1-M9).

10. Procédé selon l'une des revendications précédentes,
**caractérisé en ce que**
la représentation se fait sur place, et ce
• sur une unité d'affichage de l'appareil de mesure (90) et/ou
• sur un appareil externe relié à l'appareil de mesure (90) sans fil ou par fil, en particulier
□ sur une unité d'affichage configurée comme des lunettes de réalité augmentée et/ou
□ une unité d'affichage configurée comme un afficheur tête haute et/ou
□ un appareil de traitement des données avec une unité d'affichage, en particulier une tablette ou un smartphone,
en particulier, cependant que
• la représentation se fait directement après l'enregistrement des données de balayage ou déjà pendant l'enregistrement des données de balayage pour des données de balayage déjà enregistrées et/ou
• la représentation sert au contrôle, en particulier à l'exhaustivité des données de balayage.

11. Procédé selon l'une des revendications précédentes,
**caractérisé en ce que**,
en plus de la valeur de mesure de distance, au moins l'une des valeurs de mesure suivantes est associée au moyen de la règle d'affectation à un point du cube et peut être représentée de manière individuelle ou combinée à d'autres valeurs de mesure :
• intensité du rayonnement de mesure,
• bruit,
• exactitude de mesure,
• densité des données de balayage,
• information de couleur de la zone de balayage qui est enregistrée avec une caméra,
en particulier cependant que les différentes valeurs de mesure sont mises à disposition en tant que couches de carte d'image.

12. Procédé selon l'une des revendications précédentes,
**caractérisé en ce**
**qu'**une combinaison, en particulier un alignement grossier l'un par rapport à l'autre, de deux ou plusieurs ensembles de données de balayage enregistrement à des emplacements différents, est effectuée au moyen de l'appareil de mesure (90), cependant que
• la combinaison se fait manuellement à l'aide de la représentation, en particulier par le marquage de points d'affichage et/ou de zones d'affichage sur une unité d'affichage qui représente et/ou
• la combinaison se fait automatiquement en ayant recours à des données de position supplémentaires qui sont mises à disposition par un capteur de position, en particulier par une IMU, un récepteur GPS et/ou un traceur vidéo, de l'appareil de mesure (90) et/ou
• un affichage, en particulier qui sert au contrôle visuel, des ensembles de données combinés est ensuite effectué sur une unité d'affichage.

13. Produit programme d'ordinateur qui est mémorisé sur un support lisible par machine ou signal de données d'ordinateur représenté par une onde électromagnétique avec un code de programme qui est approprié pour exécuter le procédé selon l'une des revendications 1 à 12.

14. Système de mesure avec fonctionnalité de balayage, en particulier avec un appareil de mesure configuré comme un scanner laser ou une station totale, cependant que le système de mesure présente une unité de contrôle et d'évaluation,
**caractérisé en ce que**
l'unité de contrôle et d'évaluation est configurée pour exécuter le procédé selon l'une des revendications 1 à 12.
